# EUROPÄISCHE PATENTSCHRIFT

(11) **EP 2 130 260 B1**
(45) Veröffentlichungstag und Bekanntmachung des Hinweises auf die Patenterteilung: **26.09.2012**
(21) Anmeldenummer: 08734669.8
(22) Anmeldetag: 19.03.2008
(51) Int. Cl.: H01M 8/04

(54) **BRENNSTOFFZELLENSYSTEM UND VERFAHREN ZUR REGELUNG EINES BRENNSTOFFZELLENSYSTEMS**
FUEL CELL SYSTEM AND METHOD FOR REGULATING A FUEL CELL SYSTEM
Système de pile à combustible et procédé de régulation d'un système de pile à combustible

(30) Priorität: 23.03.2007 DE 102007014617
(43) Veröffentlichungstag der Anmeldung: 09.12.2009
(73) Patentinhaber: Forschungszentrum Jülich Gmbh, 52428 Jülich (DE)
(72) Erfinder: MÜLLER, Martin, 53489 Sinzig (DE); MAINTZ, Andreas, 52499 Baesweiler (DE); WILHELM, Jörg, 52353 Düren (DE); JANSSEN, Holger, 52428 Jülich (DE); STOLTEN, Detlef, 52076 Aachen (DE)
(74) Vertreter: Jostarndt, Hans-Dieter
(86) Internationale Anmeldenummer: PCT/EP2008/002193
(87) Internationale Veröffentlichungsnummer: WO 2008/116586

(56) Entgegenhaltungen:
- EP-A- 0 334 474
- EP-A- 1 256 992
- WO-A-2004/098035
- DE-A1- 10 065 446
- US-A1- 2002 021 109

## Beschreibung

Die Erfindung betrifft ein Brennstoffzellensystem für mobile Anwendungen, umfassend eine Brennstoffzelle und einen an die Brennstoffzelle angekoppelten DC/DC-Wandler, der an einen Energiespeicher ankoppelbar ist, ein aktives Hybridsystem mit einem solchen Brennstoffzellensystem sowie einem Energiespeicher, des Weiteren ein Verfahren zur Regelung einer Brennstoffzellenspannung und ein Verfahren zur Kennfeldregelung einer Brennstoffzelle.

Brennstoffzellensysteme in Hybridsystemen für mobile Anwendungen müssen für die dynamischen Anforderungen des Verbrauchers konzipiert und ausgelegt sein. Der grundsätzliche Aufbau umfasst dabei in der Regel eine Brennstoffzelle und einen Energiespeicher. Unterschiede bei der Ausführung derartiger Hybridsysteme bestehen insbesondere bei der elektrotechnischen Kopplung von Brennstoffzelle und Energiespeicher sowie bei der Steuerung und Regelung des Gesamtsystems und insbesondere der Brennstoffzelle.

Die bekannten Hybridsysteme, bestehend aus Brennstoffzelle und Energiespeicher, lassen sich grundsätzlich in passive und aktive Hybridsysteme unterscheiden. Bei passiven Hybridsystemen sind Brennstoffzelle und Energiespeicher direkt parallel miteinander verbunden, d.h. sie werden in jedem Betriebszustand des Gesamtsystems auf dem gleichen Spannungsniveau betrieben. Aktive Systeme zeichnen sich durch eine Entkopplung von Brennstoffzelle und Energiespeicher durch DC/DC-Wandler aus. Damit lässt sich prinzipiell unabhängig von der Lastanforderung die Aufteilung der Energieflüsse auf Brennstoffzelle und Energiespeicher beeinflussen. Eine Möglichkeit zur Steuerung aktiver Systeme besteht darin, den Ladezustand des Energiespeichers mittels Zweipunktregelung zwischen einem Minimal- und einem Maximalwert zu halten. Um den Ladezustand des Energiespeichers zwischen den zwei Grenzwerten zu halten, muss der Energiespeicher von Zeit zu Zeit von der Brennstoffzelle geladen werden. Dies geschieht nach dem bekannten Stand der Technik in der Weise, dass die Brennstoffzelle mit ihrer Maximalleistung betrieben wird.

Bei passiven Systemen wird der Brennstoffzelle die Bordspannung, d.h. die Spannung am Energiespeicher des Gesamtsystems, aufgeprägt. Hierfür ist es erforderlich, die Komponenten sehr genau aufeinander abzustimmen. Es ist nicht möglich, die Brennstoffzelle aktiv in einem anderen Arbeitspunkt zu betreiben. Problematisch sind hier zwei Punkte:

Unter Umständen können Spannungen auftreten, welche die Brennstoffzelle schädigen bzw. zu beschleunigter Alterung führen. Zweitens kann bei einer Alterung der Brennstoffzelle nicht aktiv auf die Brennstoffzellenspannung Einfluss genommen werden, um z.B. durch eine Spannungsabsenkung die Leistung aus der Brennstoffzelle zu erhalten.

Bei aktiven Systemen ist eine unabhängige Betriebsweise der Brennstoffzelle möglich. Allerdings wird beim oben beschriebenen Stand der Technik nicht darauf geachtet, ob die Betriebsweise der Brennstoffzelle Einfluss auf deren Alterung hat und wie dieser Performanceverlust der Brennstoffzelle kompensiert werden kann.

Aufgabe der Erfindung ist es, eine Brennstoffzelle in einem dynamisch betriebenen und aktiven Hybridsystem so zu betreiben, dass Alterungsprozesse der Brennstoffzelle ausgeglichen werden können.

Die Aufgabe wird erfindungsgemäß gelöst durch ein Brennstoffzellensystem für mobile Anwendungen umfassend eine Brennstoffzelle (1) und einen an die Brennstoffzelle (1) angekoppelten DC/DC-Wandler (2), der an einen Energiespeicher (3) ankoppelbar ist, wobei eine Steuer- und Regeleinheit (4) mit der Brennstoffzelle (1) und dem DC/DC-Wandler (2) verbunden ist, so dass in dieser Steuer- und Regeleinheit (4) das Kennfeld einer ungealterten Brennstoffzelle hinterlegt ist und dass die Steuer- und Regeleinheit (4) eine Kennfeldregelung (5) umfasst, die einen Wert I_{BZ,Ist,} eines Stroms vom DC/DC-Wandler (2) und von der Brennstoffzelle (1) einen Spannungswert U_{BZ,Ist} sowie einen Wert für mindestens eine weitere Betriebsgröße des Brennstoffzellensystems empfängt, die empfangenen Werte I_{BZ,Ist,} U_{BZ,Ist} sowie den Wert für die Betriebsgröße anhand des Kennfelds einer ungealterten Brennstoffzelle zu einem Steuersignal verarbeitet und das Steuersignal an eine Einrichtung (6) zur Steuerung der Betriebsgröße weiterleitet.

Auf diese Weise besteht die Möglichkeit, auf die Betriebsspannung U_{BZ} der Brennstoffzelle Einfluss zu nehmen.

In einer vorteilhaften Ausführungsform des Brennstoffzellensystems umfasst die Steuer- und Regeleinheit einen PID-Regler.

Der Einsatz eines Reglers, beispielsweise eines PD-Reglers erweist sich dann also besonders vorteilhaft, wenn eine Regelgröße einen gewünschten Wert möglichst genau einhalten soll. Dabei tritt evtl. noch hinzu, dass sich die Führungsgröße ändert. Regler und Stellglied müssen dann kontinuierlich arbeiten. Im Fall des erfindungsgemäßen Brennstoffzellensystems liegt mit der Größe U_{BZ,soll} eine Führungsgröße vor, die sich ändern kann, wie weiter unten beschrieben wird. Für solche Anwendungen haben sich lineare Regler, wie beispielsweise PID-Regler, bewährt. In der Praxis sind PID-Regler meistens keine einzelnen Geräte, sondern Kompaktregler. Die Struktur eines solchen Reglers ist eine Parallelschaltung von Proportional-, Integrier- und Differenzierglied (PID).

Das Brennstoffzellensystem kann verschiedeneTypen von Brennstoffzellen umfassen, beispielsweise Brennstoffzellen vom Typ PEFC, DMFC oder HT-PEFC.

Die Aufgabe wird weiterhin gelöst durch ein aktives Hybridsystem, das ein erfindungsgemäßes Brennstoffzellensystem sowie einen Energiespeicher umfasst, der insbesondere als Blei-, NiMH-, Li-Ionen-, NiCd-Akkumulator oder Supercap ausgebildet ist.

Zur Regelung einer Brennstoffzellenspannung U_{BZ,Ist} in einem Brennstoffzellensystem, wobei das Brennstoffzellensystem eine Brennstoffzelle, einen an die Brennstoffzelle angekoppelten DC/DC-Wandler, der an einen Energiespeicher ankoppelbar ist, und eine mit der Brennstoffzelle und dem DC/DC-Wandler verbundene Steuer- und Regeleinheit umfasst, kann vorgesehen sein, dass:
- Die Steuer- und Regeleinheit empfängt die Regelgröße U_{BZ,Ist,} vergleicht die Regelgröße U_{BZ,Ist,} mit einer vorgegebenen Sollgröße U_{BZ,Soll,} und bestimmt daraus eine Stellgröße I_{DC/DC,Soll}.
- Ein Mindestspannungswert U_{BZ,min}, wird ermittelt;
- U_{BZ,soll,} wird so gewählt, das gilt: U_{BZ,Soll}, > U_{BZ,min}.
- die Steuer- und Regeleinheit leitet die Stellgröße I_{DC/DC,soll} an den DC/DC-Wandler weiter,
- der DC/DC-Wandler belastet in Abhängigkeit von der Stellgröße I_{DC/DC,Soll} die Brennstoffzelle mit dem Strom I_{BZ,Ist}.

Somit wird die Brennstoffzelle vor zu starker Belastung bzw. vor beschleunigter Alterung geschützt. Dies geschieht dadurch, dass die Brennstoffzellenspannung U_{BZ} einen Minimalwert U_{BZ,min} nicht unterschreitet.

Die Minimalgröße U_{Bz,min} kann als Begrenzungskennfeld U_{BZ,min} eine Funktion f von Parametern sein und kann insbesondere als von der Temperatur T_{BZ} abhängiges Begrenzungskennfeld U_{Bz,min} = f (T_{BZ}), in der die Steuer- und Regeleinheit hinterlegt werden.

Damit wird dem Umstand Rechnung getragen, dass der kritische Minimalwert U_{BZ,min} wesentlich von der Temperatur T_{BZ} beeinflusst wird.

Ferner kann vorgesehen sein, dass die Minimalgröße U_{BZ,min} als Begrenzungskennfeld U_{BZ,min} als eine Funktion f einer ungealterten Brennstoffzelle in der Steuer- und Regeleinheit hinterlegt wird. Das Kennfeld einer ungealterten Brennstoffzelle wird auch als Nennkennfeld bezeichnet.

Mit der Zugrundelegung eines Nennkennfelds gewinnt man ein Begrenzungskennfeld U_{BZ,min} = f, welches brauchbare Werte für vergleichsweise neue Brennstoffzellen liefert.

Zudem kann vorgesehen sein, dass die Steuer- und Regeleinheit die Regelgröße U_{BZ,Ist} mit der vorgegebenen Sollgröße U_{BZ,soll} vergleicht und daraus eine Stellgröße I_{DC/DC,soll} bestimmt. Hierbei gilt: U_{BZ,soll} = U_{BZ,min}.

Auf diese Weise wird der Minimalwert U_{BZ,min} zu dem Sollwert U_{BZ,soll} für die Regelung der Brennstoffzellenspannung U_{BZ}. Dadurch wird gewährleistet, dass die Brennstoffzelle im Fahrbetrieb optimal ausgelastet wird, ohne dass sie dabei überlastet wird.

Die Aufgabe wird darüber hinaus gelöst durch ein Verfahren zur Kennfeldregelung einer Brennstoffzelle, umfassend Strom/Spannungs-Kennlinien der Brennstoffzelle in Abhängigkeit von mindestens einer Betriebsgröße, beispielsweise T_{BZ,} λ_{Luft}, umfassend die folgenden Schritte:
- Bestimmen von Startwerten Tₒ, λ_{o..,} von Betriebsgrößen, beispielsweise T_{BZ,} λ_{Luft}, der Brennstoffzelle.
- Messen der Spannung U_{BZ,Ist} und der Stromstärke I_{BZ,ist} der Brennstoffzelle,
- Berechnen einer fiktiven Stromstärke Iₜₕₑₒ aus der gemessenen Spannung U_{BZ,Ist} und einem Startwert Tₒ, λₒ der Betriebsgröße T_{BZ,} λ_{Luft}, anhand der Strom-/Spannungs-Kennlinien der ungealterten Brennstoffzelle,
- Vergleichen der gemessenen Stromstärke I_{BZ,Ist} mit der fiktiven Stromstärke Iₜₕₑₒ,
- Ändern der Betriebsgröße T_{BZ,} λ_{Luft} in einen neuen Startwert T₁, λ₁, so dass I_{BZ,Ist} = Iₜₕₑₒ gilt,
- Bestimmen neuer Startwerte T₁, λ₁, ... der Betriebsgrößen, beispielsweise T_{BZ}, ... der Brennstoffzelle.

Auf diese Weise wird das Kennfeld der Brennstoffzelle dem altersbedingten Nachlassen ihrer Leistungsfähigkeit angepasst, und es kann die Leistungsfähigkeit der Brennstoffzelle trotz einsetzender Alterung zumindest noch für eine erheblich verlängerte Betriebsdauer erhalten werden.

Ausgewählt werden kann eine Betriebsgröße aus der Gruppe der Größen Temperatur T_{BZ}, Luftüberschuss λ_{Luft}, Luftvolumenstrom *d*/*dt* V_{Luft}, Brennstoffkonzentration, Brennstoffmassenstrom *d*/*dt* m_{Brennstoff}, Betriebsdruck, Brennstoff-, Luftbefeuchtung oder Brennstoffumwälzrate.

Die Erfindung wird im Folgenden beispielhaft anhand der Zeichnungen erläutert. Es zeigen:
- Figur 1: eine schematische Darstellung einer Verschaltung von Brennstoffzelle und Energiespeicher in einem aktiven Hybridsystem,
- Figur 2: eine Regelungstruktur eines erfindungsgemäßen Brennstoffzellensystems,
- Figur 3: ein Ablaufdiagramm zur Kennfeldregelung,
- Figur 4: ein Ablaufdiagramm zur Kennfeldregelung am Beispiel der Betriebsgröße Luftüberschuss.

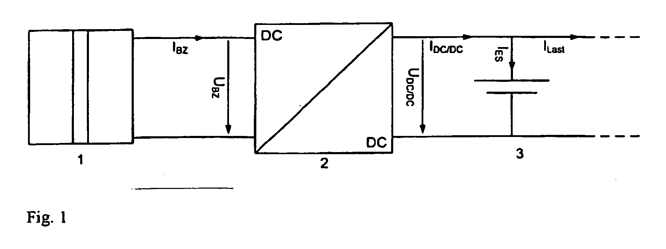

Die Figur 1 zeigt eine schematische Darstellung einer Verschaltung einer Brennstoffzelle 1 und eines Energiespeichers 3 in einem aktiven Hybridsystem. Zwischen der Brennstoffzelle 1 und dem Energiespeicher 3 ist ein DC/DC-Wandler 2 angeordnet, bei dem der Ausgangsstrom I_{DC/DC} aktiv eingestellt werden kann. Die nicht abgebildete Steuer- und Regeleinheit 4 gibt einen Sollwert I_{DC/DC,Soll} für den Strom vor, und der DC/DC-Wandler 2 regelt diesen ein.

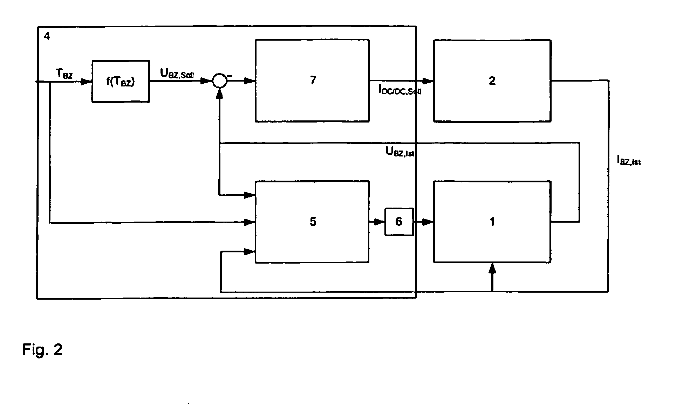

In der Figur 2 ist eine Regelungsstruktur eines erfindungsgemäßen Brennstoffzellensystems dargestellt. In diesem Beispiel wird der Minimalwert U_{BZ,min} als Sollwert U_{BZ,Soll} für die Brennstoffzellenspannung herangezogen. Auf diese Weise wird eine optimale Auslastung der Brennstoffzelle 1 im Fahrbetrieb gewährleistet, ohne dass die Brennstoffzelle 1 überlastet wird. Eine Steuer- und Regeleinheit 4 umfasst einen PID-Regler 7, eine Kennfeldregelung 5 und eine Einrichtung 6 zur Steuerung mindestens einer Betriebsgröße. Der PID-Regler 7 hat die Aufgabe, die Brennstoffzellenspannung U_{BZ} auf einen Sollwert U_{BZ,Soll} einzuregeln. Als Stellgröße dient der Strom I_{DC/CS,soll} am Ausgang des DC/DC-Wandlers 2. Der sich einstellende Brennstoffzellenstrom I_{BZ,Ist} ist Eingangsparameter für die Kennfeldregelung 5 und die Brennstoffzelle 1. Wenn die Brennstoffzelle 1 mit dem Strom I_{BZ,Ist} belastet ist, ergibt sich als Ausgangswert ein aktueller Istwert U_{BZ,Ist} der Brennstoffzellenspannung in Abhängigkeit von den Betriebsgrößen, wobei der Istwert U_{BZ,Ist} am PID-Regler 7 mit dem vorgegebenen Sollwert U_{BZ,soll} verglichen wird. Bei einer Regelabweichung I U_{BZ,soll} - U_{BZ,Ist} I > 0 wird die Stellgröße I_{DC/DC,soll} korrigiert, und die Regelungsschleife wird erneut durchlaufen.

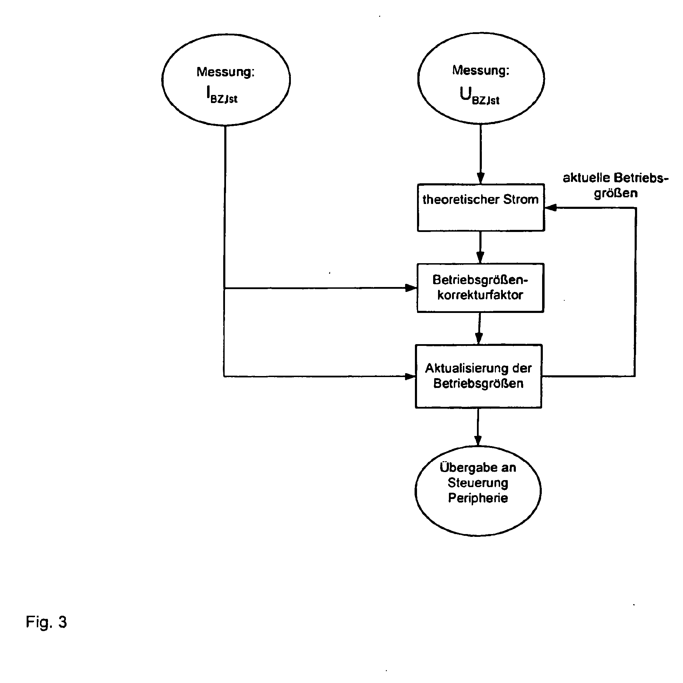

Aufgabe der Kennfeldregelung 5 ist es, Abweichungen der Brennstoffzellenperformance vom Normalzustand durch Korrektur von Betriebsgrößen auszugleichen. Die Kennfeldregelung 5 ist damit ein vorteilhaftes Element des erfindungsgemäßen Brennstoffzellensystems. Hierbei ist der Steuer - und Regeleinheit 4 zunächst das Nennkennfeld einer ungealterten Brennstoffzelle 1 hinterlegt. Das Kennfeld umfasst dabei Strom/Spannungs-Kennlinien der Brennstoffzelle 1 in Abhängigkeit von Betriebsgrößen. Eingänge in die Kennfeldregelung 5 sind die gemessenen Werte für die Stackspannung U_{BZ,Ist} und den Stackstrom I_{BZ,Ist}. d.h. die Spannung U_{BZ,Ist} am Brennstoffzellenstapel und die Stromstärke I_{BZ,Ist} am Brennstöffzellenstapel. Der dabei ablaufende Prozess ist in allgemeiner Form in der Figur 3 dargestellt.

Die Figur 3 zeigt ein Ablaufdiagramm zur Kennfeldregelung. In den Block "theoretischer Strom" gehen als Informationen die aktuell gemessenen Werte für die Betriebsgrößen einschließlich der aktuell gemessenen Werte U_{BZ,Ist} für die Stackspannung ein. Unter Verwendung des oben beschriebenen Kennfelds wird eine zugehörige fiktive Stromstärke Iₜₕₑₒ bestimmt. Der Block "Betriebsgrößenkorrekturfaktor" ermittelt aus der Abweichung aus dem gemessenen Brennstoffzettenstrom I_{BZ,Ist} und der zuvor bestimmten fiktiven Stromstärke Iₜₕₑₒ, welche Betriebsgrößen in welchem Umfang korrigiert werden, um den angestrebten Normalzustand der Brennstoffzellenperformance wieder herzustellen. Der Block "Aktualisierung der Betriebsgrößen" berechnet die neuen Werte der Betriebsgrößen und übergibt diese an die Einrichtung 6 zur Steuerung der Peripherie.

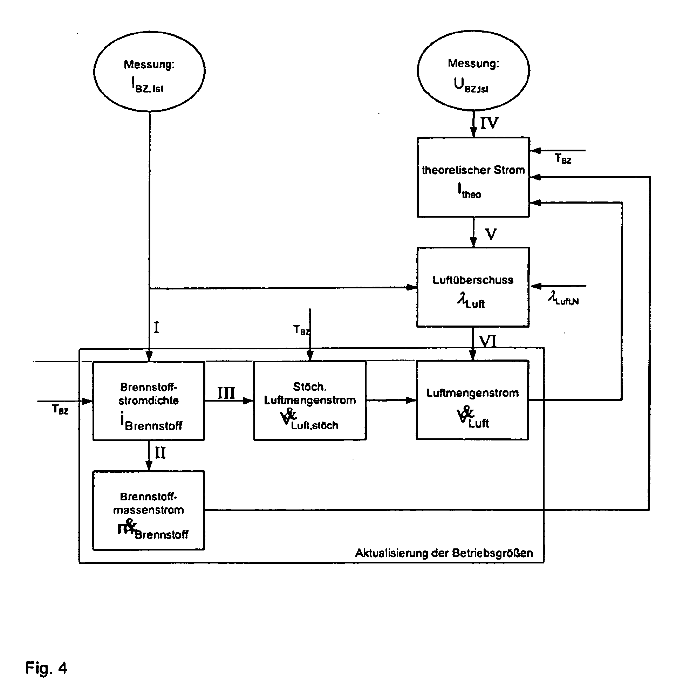

In der Figur 4 ist ein Ablaufdiagramm zur Kennfeldregelung am Beispiel der Betriebsgröße Luftüberschuss λ_{Luft} dargestellt. Es wird dabei eine Korrektur der Betriebsgröße Luftüberschuss λ_{Luft} zum Erreichen des Normalzustandes der Brennstoffzelle 1 vorgenommen. Hierfür werden die folgenden Schritte durchlaufen:
I. Berechnung der Brennstoffstromdichte i_{Brennstoff} unter Berücksichtigung von (temperaturabhängigen) Brennstoffverlusten,
II. Berechnung des Brennstoffmassenstroms d/dt m_{Brennstoff} mit Hilfe des Faradayschen Gesetzes und Ansteuerung der Brennstoffversorgungseinheit, beispielsweise mittels des Gasregelventils, einer Dosierpumpe etc.,
III. Berechnung des stöchiometrischen Luftvolumenstroms *d*/*dt* V_{Luft,stöch},
IV. Berechnung des fiktiven Stackstroms Iₜₕₑₒ in Abhängigkeit von den aktuell gemessenen Betriebsgrößen unter Verwendung des hinterlegten Kennfelds,
V. Vergleich des gemessenen Stackstroms I_{BZ,Ist} mit dem fiktiven Stackstrom Iₜₕₑₒ und Änderung der Stellgröße Luftüberschuss λ_{Luft}, bis der gemessene Stackstrom I_{BZ,Ist} mit dem fiktiven Stackstrom Iₜₕₑₒ übereinstimmt,
VI. Berechnung des Luftvolumenstroms d/dt V_{Luft}.

### Bezugszeichen:

- 1: Brennstoffzelle
- 2: DC/DC-Wandler
- 3: Energiespeicher
- 4: Steuer- und Regeleinheit
- 5: Kennfeldregelung
- 6: Einrichtung zur Steuerung der Betriebsgrößen
- 7: PID Regler

## Patentansprüche

1. Brennstoffzellensystem für mobile Anwendungen, umfassend eine Brennstoffzelle (1) und einen an die Brennstoffzelle (1) angekoppelten DC/DC-Wandler (2), der an einen Energiespeicher (3) ankoppelbar ist,
**dadurch gekennzeichnet,**
**dass** eine Steuer- und Regeleinheit (4) mit der Brennstoffzelle (1) und dem DC/DC-Wandler (2) verbunden ist, dass in dieser Steuer- und Regeleinheit (4) das Kennfeld einer ungealterten Brennstoffzelle hinterlegt ist und dass die Steuer- und Regeleinheit (4) eine Kennfeldregelung (5) umfasst, die einen Wert I_{BZ,Ist}, eines Stroms vom DC/DC-Wandler (2) und von der Brennstoffzelle (1) einen Spannungswert U_{BZ,Ist} sowie einen Wert für mindestens eine weitere Betriebsgröße des Brennstoffzellensystems empfängt, die empfangenen Werte I_{BZ,Ist}, U_{BZ,Ist} sowie den Wert für die Betriebsgröße anhand des Kennfelds einer ungealterten Brennstoffzelle zu einem Steuersignal verarbeitet und das Steuersignal an eine Einrichtung (6) zur Steuerung der Betriebsgröße weiterleitet.

2. Brennstoffzellensystem nach Anspruch 1,
**dadurch gekennzeichnet,**
**dass** eine Brennstoffzelle (1) vom Typ PEFC, DMFC oder HT-PEFC verwendet wird.

3. Aktives Hybridsystem, umfassend ein Brennstoffzellensystem nach einem der vorhergehenden Ansprüche sowie einen Energiespeicher (3), der insbesondere als Blei-, NiMH-, Lilonen-, NiCd-Akkumulator oder Supercap ausgebildet ist.

4. Verfahren zur Kennfeldregelung eines Brennstoffzellensystems nach Anspruch 1 oder 2 oder eines aktiven Hybridsystems nach Anspruch 3, umfassend Strom-/Spannungs-Kennlinien einer ungealterten Brennstoffzelle in Abhängigkeit von mindestens einer Betriebsgröße (T_{BZ}, λ_{Luft},)umfassend die folgenden Schritte:
- Bestimmen von Startwerten Tₒ, λₒ von Betriebesgrößen (T_{BZ}, λ_{Luft,}) der Brennstoffzelle.
- Messen der Spannung U_{BZ,Ist} und der Stromstärke I_{BZ,Ist} der Brennstoffzelle (1),
- Berechnen einer fiktiven Stromstärke (Iₜₕₑₒ )aus der gemessenen Spannung U_{BZ,Ist} und einem Startwert (Tₒ, λₒ) der Betriebsgröße T_{BZ}, λ_{Luft} anhand der Strom-/Spannungs-Kennlinien der ungealterten Brennstoffzelle,
- Vergleichen der gemessenen Stromstärke I_{BZ,Ist} mit der fiktiven Stromstärke Iₜₕₑₒ.
- Ändern der Betriebsgröße (T_{BZ}, λ_{Luft}) in einen neuen Startwert (T₁, λ₁,) so dass I_{BZ,Ist} = Iₜₕₑₒ gilt,
- Bestimmen neuer Startwerte (T₁, λ₁) der Betriebsgröße (T_{BZ}, λ_{Luft},) der Brennstoffzelle (1).

5. Verfahren nach Anspruch 4
**dadurch gekennzeichnet,**
**dass** eine Betriebsgröße aus der Gruppe Temperatur T_{BZ}, Luftüberschuss λ_{Luft}, Luftvolumenstrom *d*/*dt* V_{Luft}, Brennstoffkonzentration, Brennstoffmassenstrom *d*/*dt* m_{Brennstoff}, Betriebsdruck, Brennstoff-, Luftbefeuchtung oder Brennstoffumwälzrate gewählt wird.

## Claims

1. A fuel cell (FC) system for mobile applications, comprising a fuel cell (1) and a DC-to-DC converter (2) that is coupled to the fuel cell (1) and that can be coupled to an energy storage unit (3),
**characterized in that**
a control and regulation unit (4) is connected to the fuel cell and to the DC-to-DC converter (2), **in that** the performance characteristics of an unaged fuel cell is stored in this control and regulation unit (4), and **in that** the control and regulation unit (4) comprises a performance characteristics regulator (5) that receives a value I_{FC,actual} of a current from the DC-to-DC converter (2) and a voltage value U_{FC,actual} from the fuel cell (1) as well as a value for at least one additional operating quantity of the fuel cell system, it then processes the received I_{FC,actual}, U_{FC,actual} values as well as the value for the operating quantity on the basis of the performance characteristics of an unaged fuel cell to form a control signal and it forwards the control signal to a device (6) for controlling the operating quantity.

2. The fuel cell system according to claim 1,
**characterized in that**
a fuel cell (1) of the PEFC, DMFC or HT-PEPC type is used.

3. An active hybrid system, comprising a fuel cell system according to one of the preceding claims, as well as an energy storage unit (3) that is especially configured as a lead, NiMH, Li-ion, NiCd accumulator or as a supercap.

4. A method for regulating the performance characteristics of a fuel cell system according to claim 1 or 2 or of an active hybrid system according to claim 3, comprising current/voltage characteristic curves of an unaged fuel cell as a function of at least one operating quantity (T_{FC}, λₐᵢᵣ) comprising the following steps:
- determining starting values To, λ₀ of the operating quantities (T_{FC}, λₐᵢᵣ) of the fuel cell,
- measuring the voltage U_{FC,actual} and the current strength I_{FC,actual} of the fuel cell (1),
- calculating a fictitious current strength (I_{theoretical}) from the measured voltage U_{FC,actual} and from a starting value (Tₒ, λₒ) of the operating quantity T_{FC}, λₐᵢᵣ on the basis of the current/voltage characteristic curves of the unaged fuel cell,
- comparing the measured current strength I_{FC,actual} with the fictitious current strength Itheoretical,
- changing the operating quantity (T_{FC}, λₐᵢᵣ) into a new starting value (T₁, λ₁) so that I_{FC,actual} = I_{theoretical},
- determining new starting values (T₁, λ₁) of the operating quantity (T_{FC}, λₐᵢᵣ) of the fuel cell (1).

5. The method according to claim 4,
**characterized in that**
an operating quantity is selected from the group consisting of temperature T_{FC}, air excess λₐᵢᵣ, air volume flow rate *d*/*dt* Vₐᵢᵣ, fuel concentration, fuel mass flow rate *d*/*dt* V_{fuel}, operating pressure, fuel moisturization, air moisturization or fuel circulation rate.

## Revendications

1. Système de pile à combustible pour des applications mobiles, comprenant une pile à combustible (1) et un convertisseur CC (DC)/CC (DC) (2) couplé à la pile à combustible (1) et pouvant être couplé à un accumulateur d'énergie (3), **caractérisé en ce qu'**une unité de commande et de réglage (4) est reliée à la pile à combustible (1) et au convertisseur CC (DC)/CC (DC) (2), **en ce que** le diagramme caractéristique d'une pile à combustible non vieillie est déposé dans cette unité de commande et de réglage (4) et **en ce que** l'unité de commande et de réglage (4) comprend un régulateur sur base du diagramme caractéristique (5), lequel reçoit une valeur I_{BZ,réelle} d'un courant du convertisseur CC (DC)/CC (DC) (2) et une valeur de tension U_{BZ,réelle} de la pile à combustible (1) ainsi qu'une valeur d'au moins une autre grandeur de fonctionnement du système de pile à combustible, traite les valeurs reçues I_{BZ,réelle}, U_{BZ,réelle} et la valeur de la grandeur de fonctionnement à l'aide du diagramme caractéristique d'une pile à combustible non vieillie pour obtenir un signal de commande et retransmet le signal de commande à un dispositif (6) pour la commande de la grandeur de fonctionnement.

2. Système de pile à combustible selon la revendication 1, **caractérisé en ce qu'**on utilise une pile à combustible (1) du type PEFC, DMFC ou HT-PEFC.

3. Système hybride actif, comprenant un système de pile à combustible selon l'une des revendications précédentes et un accumulateur d'énergie (3) qui se présente notamment sous la forme d'un accumulateur au plomb, au NiMH, au Li-ion ou au NiCd, ou sous la forme d'un supercondensateur (supercap).

4. Procédé de réglage sur base du diagramme caractéristique d'un système de pile à combustible selon la revendication 1 ou 2 ou d'un système hybride actif selon la revendication 3, comprenant des courbes caractéristiques de courant / tension d'une pile à combustible non vieillie en fonction d'au moins une grandeur de fonctionnement (T_{BZ}, λₐᵢᵣ), comprenant les étapes suivantes :
- détermination de valeurs de départ T₀, λ₀ de grandeurs de fonctionnement (T_{BZ,} λₐᵢᵣ) de la pile à combustible ;
- mesure de la tension U_{BZ,réelle} et de l'intensité du courant I_{BZ,réelle} de la pile à combustible (1) ;
- calcul d'une intensité de courant fictive (I_{théo}) à partir de la tension mesurée U_{BZ,réelle} et d'une valeur de départ (To, λ₀) de la grandeur de fonctionnement T_{BZ}, λₐᵢᵣ à l'aide des courbes caractéristiques de courant / tension de la pile à combustible non vieillie ;
- comparaison de l'intensité de courant mesurée I_{BZ,réelle} avec l'intensité de courant fictive I_{théo} ;
- modification de la grandeur de fonctionnement (T_{BZ}, λₐᵢᵣ) pour obtenir une nouvelle valeur de départ (T₁, λ₁) de sorte qu'on a I_{BZ,réelle} = I_{théo} ;
- détermination de nouvelles valeurs de départ (T₁, λ₁) de la grandeur de fonctionnement (T_{BZ}, λₐᵢᵣ) de la pile à combustible (1).

5. Procédé selon la revendication 4, **caractérisé en ce qu'**une grandeur de fonctionnement est choisie dans le groupe comprenant la température T_{BZ}, l'excédent d'air λₐᵢᵣ, le débit volumique d'air d/dt Vₐᵢᵣ, la concentration en combustible, le débit massique de combustible d/dt m_{combustible}, la pression de fonctionnement, l'humidité du combustible, de l'air ou le taux de circulation du combustible.
